# EUROPEAN PATENT APPLICATION

(11) **EP 4 851 246 A1**
(43) Date of publication of application: **09.12.2026**
(21) Application number: 25748630.8
(22) Date of filing: 28.01.2025
(51) Int. Cl.: C08L 23/0876, B32B 27/28, C08L 33/02, C09D 5/02, C09D 123/08, C09D 133/02, D21H 19/20, D21H 19/22

(54) **RESIN AQUEOUS DISPERSION COMPOSITION**

(30) Priority: 31.01.2024 JP 2024013195
(71) Applicant: Sumitomo Seika Chemicals Co., Ltd., Kako-gun, Hyogo 675-0145 (JP)
(72) Inventor: HAYAMIZU, Naohisa, Himeji-shi, Hyogo 672-8076 (JP); OMURA, Emika, Himeji-shi, Hyogo 672-8076 (JP)
(74) Representative: Vossius & Partner Patentanwälte Rechtsanwälte mbB
(86) International application number: PCT/JP2025/002635
(87) International publication number: WO 2025/164626

(57) **Abstract**

Provided is a resin aqueous dispersion composition that has a suitable viscosity for excellent handling properties and exhibits excellent barrier properties (water resistance and water vapor barrier properties) during film formation (e.g., during formation of a coated film). More specifically, the following aqueous dispersion composition is provided: an aqueous dispersion composition comprising a copolymer containing structural units derived from a compound having an ethylene skeleton and structural units derived from acrylic acid, and ammonia, wherein the content of the structural units derived from acrylic acid in the copolymer is 5 to 19 mass%, and the degree of resin neutralization calculated by the following formula is 5 to 10 mass%: Formula: 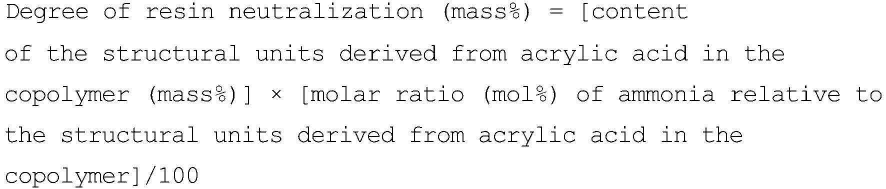 Degree of resin neutralization (mass%) = [content of the structural units derived from acrylic acid in the copolymer (mass%)] × [molar ratio (mol%) of ammonia relative to the structural units derived from acrylic acid in the copolymer]/100

## Description

### Technical Field

The present disclosure relates to, for example, an aqueous dispersion composition comprising a copolymer. Specifically, the present disclosure relates to an aqueous dispersion composition comprising a copolymer containing structural units derived from a compound having an ethylene skeleton and structural units derived from acrylic acid, and ammonia.

### Background Art

Some types of resin can form films with good heat adhesion and are thus used in a wide range of applications, such as coating agents, heat-sealing agents, delayed tack agents, in-mold labels, part-coating agents, fiber-treating agents, and various binders.

The resins used for these various applications may be used as a solid, or as dissolved or dispersed in a solvent or water. Since resins in the former state make it difficult to form thin films and are therefore less likely to respond to the recent global demand for reducing plastic consumption, resins in the latter state have been increasingly used when forming films. Among those in the latter state, in particular, from the viewpoint of resource saving, safety, and environmental problems, aqueous products that do not require the use of organic solvents, in particular, those that are dispersed in water have been increasingly in demand.

### Citation List

### Patent Literature

PTL 1: JPS50-135141A
PTL 2: JP6426751B
PTL 3: JP4364983B

### Summary of Invention

### Technical Problem

Due to the above circumstances, the demand for resin aqueous dispersion compositions with excellent performance has been increasing. In particular, depending on the type of substrate and application, improved handling properties of resin aqueous dispersion compositions and enhanced barrier properties (water resistance and water vapor barrier properties) of the resulting films may be required.

### Solution to Problem

For example, the present disclosure encompasses the subject matter described in the following items.

### Item 1.

An aqueous dispersion composition comprising a copolymer containing structural units derived from a compound having an ethylene skeleton and structural units derived from acrylic acid, and ammonia,
wherein the content of the structural units derived from acrylic acid in the copolymer is 5 to 19 mass%, and the degree of resin neutralization calculated by the following formula is 5 to 10 mass%: Formula: 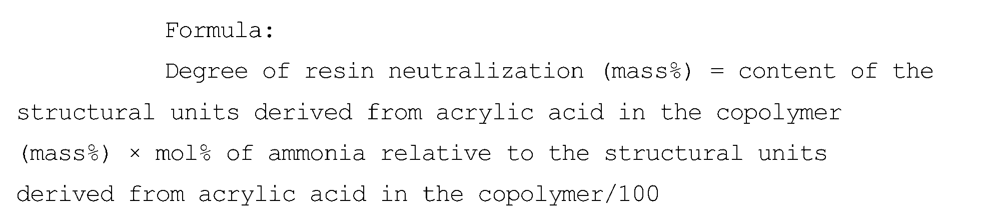 Degree of resin neutralization (mass%) = content of the structural units derived from acrylic acid in the copolymer (mass%) × mol% of ammonia relative to the structural units derived from acrylic acid in the copolymer/100

### Item 2.

The aqueous dispersion composition according to Item 1, wherein the copolymer is contained in an amount of 10 to 40 mass%.

### Item 3.

The aqueous dispersion composition according to Item 1 or 2, wherein the aqueous dispersion composition has a viscosity at 25°C of 1000 mPa·s or less.

### Item 4.

The aqueous dispersion composition according to any one of Items 1 to 3, wherein the compound having an ethylene skeleton is represented by formula (1):

CHR¹=CHR² (1)

wherein R¹ and R² are the same or different, and each represents a hydrogen atom, a halogen atom, a C₁₋₆ alkyl group, or a C₆₋₁₀ aryl group.

### Item 5.

The aqueous dispersion composition according to any one of Items 1 to 4, wherein the copolymer is an ethylene/acrylic acid copolymer.

### Item 6.

A laminate comprising a substrate and a film on the substrate, the film being formed by applying the aqueous dispersion composition according to any one of Items 1 to 5 to the substrate.

### Item 7.

Coated paper formed by applying the aqueous dispersion composition according to any one of Items 1 to 5 to paper.

### Advantageous Effects of Invention

The invention according to the present disclosure provides a resin aqueous dispersion composition that has a suitable viscosity for excellent handling properties, and that can form a film exhibiting excellent water resistance and water vapor barrier properties.

In a preferred embodiment, the film formed from the resin aqueous dispersion composition further exhibits blocking resistance and/or heat-sealing properties that are sufficiently durable for practical use.

### Description of Embodiments

Below, each embodiment encompassed by the present disclosure is described in more detail. The present disclosure preferably encompasses, for example, a resin aqueous dispersion composition comprising a specific resin and ammonia under specific conditions; however, the present disclosure is not limited to these, and encompasses everything disclosed herein and recognizable to those skilled in the art.

As described above, the resin aqueous dispersion composition encompassed by the present disclosure comprises a specific resin and ammonia. The resin aqueous dispersion composition is also referred to as "the aqueous dispersion composition of the present disclosure." Further, the specific resin is a copolymer containing structural units derived from a compound having an ethylene skeleton and structural units derived from acrylic acid. The specific resin (i.e., the copolymer containing structural units derived from a compound having an ethylene skeleton and structural units derived from acrylic acid) is also referred to as "the polymer of the present disclosure."

As described above, the polymer of the present disclosure is a copolymer containing structural units derived from a compound having an ethylene skeleton and structural units derived from acrylic acid (in other words, a copolymer containing a compound having an ethylene skeleton and acrylic acid as monomers).

The compound having an ethylene skeleton in the present disclosure is a compound that has an ethylene skeleton and does not have a carboxyl group. The compound is preferably represented by formula (1):

CHR¹=CHR² (1)

wherein R¹ and R² are the same or different, and each represents a hydrogen atom, a halogen atom, a C₁₋₆ alkyl group, or a C₆₋₁₀ aryl group.
The compound of formula (1) may be in the cis- or trans-form.

Examples of halogen atoms include fluorine atoms, chlorine atoms, bromine atoms, and iodine atoms, with fluorine atoms and chlorine atoms being particularly preferred. The alkyl group having 1 to 6 (1, 2, 3, 4, 5, or 6) carbon atoms may be liner or branched, and is preferably liner. The number of carbon atoms in the alkyl group is more preferably 1 to 4. More specific examples include methyl, ethyl, n-propyl, isopropyl, n-butyl, isobutyl, sec-butyl, isobutyl, and tert-butyl groups. Examples of aryl groups having 6 to 10 (6, 7, 8, 9, or 10) carbon atoms include phenyl, toluyl, xylyl, and naphthyl groups.

The compound having an ethylene skeleton is more preferably a compound represented by formula (1a):

CHR¹=CH₂ (1a)

wherein R¹ is as defined above.

Particularly preferred compounds having an ethylene skeleton include ethylene and styrene, with ethylene being the most preferred.

In the polymer of the present disclosure, the compounds having an ethylene skeleton can be used alone or in a combination of two or more, and preferably used alone.

The polymer of the present disclosure may contain structural units other than structural units derived from a compound having an ethylene skeleton and structural units derived from acrylic acid as long as the effects of the invention according to the present disclosure are not impaired. Examples of such structural units include structural units derived from α,β-unsaturated carboxylic acids, such as methacrylic acid, crotonic acid, maleic acid, fumaric acid, and itaconic acid, as well as butadiene and isoprene. When using these, they can be used alone or in a combination of two or more.

Although not particularly limited, the sum of structural units derived from a compound having an ethylene skeleton and structural units derived from acrylic acid is preferably 80 mol% or more, and preferably 85, 90, 95, 96, 97, 98, or 99 mol% or more, of all the structural units of the polymer of the present disclosure. The sum of structural units derived from a compound having an ethylene skeleton and structural units derived from acrylic acid may be 100 mol%. When 100 mol% of the structural units are structural units derived from a compound having an ethylene skeleton and structural units derived from acrylic acid, and when the compound having an ethylene skeleton is ethylene, the polymer of the present disclosure is an ethylene/acrylic acid copolymer. When 100 mol% of the structural units are structural units derived from a compound having an ethylene skeleton and structural units derived from acrylic acid, and when the compound having an ethylene skeleton is styrene, the polymer of the present disclosure is a styrene/acrylic acid copolymer.

In the polymer of the present disclosure, the content of structural units derived from acrylic acid is 5 to 19 mass%. The upper or lower limit of this range may be, for example, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, or 18.5 mass%. For example, the range may be 5.5 to 18.5 mass%.

The content of structural units derived from acrylic acid (mass%) in the acrylic acid copolymer of the present disclosure can be calculated from the amount of acrylic acid relative to the total amount of monomers contributing to the configuration of the copolymer.

To adjust the content of structural units derived from acrylic acid in the polymer of the present disclosure, 2 or more (preferably 2, 3, 4, or 5, more preferably 2 or 3, and even more preferably 2) polymers that correspond to the polymer of the present disclosure and differ in the content of structural units derived from acrylic acid may be mixed and used. Mixing of such polymers is preferably performed by melt-kneading, particularly from the viewpoint of achieving uniform mixing. A composition obtained by mixing two or more polymers of the present disclosure can also be preferably used as the polymer of the present disclosure. For example, a mixture obtained by mixing equal amounts of a polymer of the present disclosure having a content of structural units derived from acrylic acid of 20 mass% and a polymer of the present disclosure having a content of structural units derived from acrylic acid of 15 mass% can be used as a polymer of the present disclosure having a content of structural units derived from acrylic acid of 17.5 mass%.

Although not particularly limited, the mass ratio of structural units derived from a compound having an ethylene skeleton and structural units derived from acrylic acid (structural units derived from a compound having an ethylene skeleton:structural units derived from acrylic acid) in the polymer of the present disclosure is preferably about 95:5 to 81:19.

Although not particularly limited, the polymer of the present disclosure preferably has a melt index of about 10 to 500 g/10 min. A melt flow rate of 10 g/10 min or more facilitates emulsification, while a melt flow rate of 500 g/10 min or less reduces stickiness and facilitates handling. The upper or lower limit of this range may be, for example, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, or 490 g/10 min. The range may be, for example, 20 to 450 g/10 min or 40 to 400 g/10 min.

In the present disclosure, the melt index is a value obtained by heating and pressurizing resin placed in a cylindrical extrusion plastometer at a constant temperature (190°C), and measuring the amount of resin extruded from the opening at the bottom of the container in 10 minutes.

In the aqueous dispersion composition of the present disclosure, the degree of resin neutralization calculated by the following formula is 5 to 10 mass%: 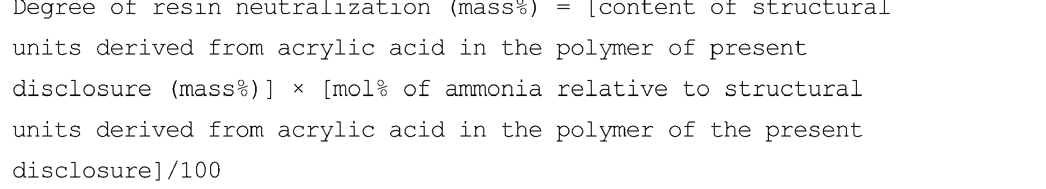 Degree of resin neutralization (mass%) = [content of structural units derived from acrylic acid in the polymer of present disclosure (mass%)] × [mol% of ammonia relative to structural units derived from acrylic acid in the polymer of the present disclosure]/100 The upper or lower limit of this range (5 to 10 mass%) may be, for example, 5.5, 6, 6.5, 7, 7.5, 8, 8.5, 9, or 9.5 mass%. For example, the range may be 5.5 to 9.5 mass%.

In the aqueous dispersion composition of the present disclosure, the degree of neutralization of acrylic acid in the copolymer of the present disclosure contained therein is preferably 35 to 65 mol%, more preferably 40 to 60 mol%, and even more preferably 45 to 55 mol%.

The degree of neutralization of acrylic acid is a value determined by the following formula: 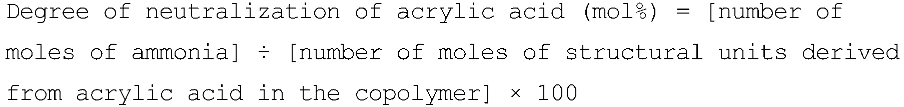 Degree of neutralization of acrylic acid (mol%) = [number of moles of ammonia] ÷ [number of moles of structural units derived from acrylic acid in the copolymer] × 100

The aqueous dispersion composition of the present disclosure may contain a base other than ammonia as long as the effects of the invention according to the present disclosure are not impaired. Examples of such bases include organic amines and alkali metal hydroxides. Examples of organic amines include methylamine, ethylamine, diethylamine, diethanolamine, and triethanolamine. Examples of alkali metal hydroxides include sodium hydroxide, potassium hydroxide, and lithium hydroxide. When using these, they can be used alone or in a combination of two or more. However, when a base other than ammonia is used, the effects may be impaired. Therefore, it is preferable to set its amount used to be relatively small, and it is more preferable that the only base contained in the aqueous dispersion composition of the present disclosure is ammonia.

Although it is not particularly limited as long as the effects of the invention according to the present disclosure are not impaired, the polymer of the present disclosure is preferably contained in an amount of about 10 to 40 mass% in the aqueous dispersion composition of the present disclosure. The upper or lower limit of this range may be, for example, 11, 12, 13, 14, 15, 16, 17, 18, 19, 20, 21, 22, 23, 24, 25, 26, 27, 28, 29, 30, 31, 32, 33, 34, 35, 36, 37, 38, or 39 mass%. For example, the range may be 15 to 35 mass% or 20 to 30 mass%.

The viscosity of the aqueous dispersion composition of the present disclosure is preferably 1000 mPa·s or less. The lower limit is not particularly limited, but is, for example, 10 mPa·s. The upper or lower limit of this range (10 to 1000 mPa·s) may be, for example, 20, 30, 40, 50, 60, 70, 80, 90, 100, 150, 200, 250, 300, 350, 400, 450, 500, 550, 600, 650, 700, 750, 800, 850, 900, or 950 mPa·s. For example, the range may be 20 to 950 mPa·s or 50 to 900 mPa·s.

In the present disclosure, the viscosity of the composition is measured at 25°C using a B rotational viscometer. Specifically, the viscosity is determined by reading the viscosity value one minute after the rotor starts rotating at 25°C by setting the rotation speed of the spindle rotor to 60 rpm. The rotor can be appropriately set according to the viscosity. As a guide, the rotor for use is as follows: rotor No. 3 for less than 2000 mPa·s, rotor No. 4 for 2000 mPa·s or more and less than 5000 mPa·s, rotor No. 5 for 5000 mPa·s or more and less than 15000 mPa·s, rotor No. 6 for 15000 mPa·s or more and less than 40000 mPa·s, and rotor No. 7 for 40000 mPa·s or more.

In the aqueous dispersion composition of the present disclosure, the aqueous medium for use is preferably water, and may be various types of water, such as tap water, industrial water, ion-exchanged water, deionized water, and pure water. Particularly preferred is deionized water or pure water.

The aqueous dispersion composition of the present disclosure may contain other components as long as the effects of the invention according to the present disclosure are not impaired. Examples include antifoaming agents, viscosity modifiers, pH modifiers, surfactants, and antifungal agents. Examples further include, if necessary, antioxidants, fatty acid amides, waxes, silicone oils, and like blocking property improvement agents, and alcohols.

The aqueous dispersion composition of the present disclosure can be prepared, for example, by mixing the polymer of the present disclosure, ammonia, and an aqueous medium so that the polymer reaches a specific concentration and a specific degree of resin neutralization, optionally followed by pressurization and/or heating. Furthermore, the polymer can be diluted by adding water to achieve a specific concentration.

The aqueous dispersion composition of the present disclosure is useful, for example, as a binder or a coating agent. For example, the aqueous dispersion composition of the present disclosure can be applied to and dried on a substrate to form a film. The substrate is preferably, for example, paper, and more preferably packaging paper for food and beverages. This film is capable of preventing food or beverages from coming in direct contact with the paper (packaging paper). The film has a little adverse effect on food and beverages, and is preferable.

The present disclosure also preferably encompasses, for example, a laminate comprising a substrate (preferably paper) and a film on the substrate, the film being formed by applying the aqueous dispersion composition of the present disclosure to the substrate.

When the substrate is paper, an example of the laminate is coated paper. The coated paper can be obtained, for example, by applying the aqueous dispersion composition of the present disclosure to paper.

When the aqueous dispersion composition of the present disclosure is applied to high-quality paper with a basis weight of 52 g/m² to a dry coating amount of 5 g/m², the resulting coated paper preferably has a moisture permeability (g/(m²·24 h)) of 200 or less, more preferably 150 or less, even more preferably 100 or less, and still even more preferably 80, 70, or 60 or less, as measured in accordance with JIS Z 0208 (1976). The lower the moisture permeability (g/(m²·24 h)), the higher the water vapor barrier properties.

Further, when the aqueous dispersion composition of the present disclosure is applied to high-quality paper with a basis weight of 52 g/m² to a dry coating amount of 5 g/m², the resulting coated paper preferably has a water absorptiveness (g/m²) of 5 or less, more preferably 4, 3, or 2 or less, and even more preferably 1 or less, as measured by the Cobb method (contact time of the coated paper with water: 5 minutes). The lower the water absorptiveness (g/m²), the higher the water resistance.

Moreover, when the aqueous dispersion composition of the present disclosure is applied to high-quality paper with a basis weight of 52 g/m² to a dry coating amount of 5 g/m², the coated surfaces of the resulting coated paper are brought together and bonded at a sealing pressure of 5 kg/cm², a sealing time of 2 hours, and a sealing temperature within the range of 60 to 110°C, and the resulting bonded paper (test piece) is subjected to a T-peel test (tensile speed: 300 mm/min) in accordance with JIS Z 0238 (1998), the highest bonding temperature at which interfacial peeling occurs without paper tearing is preferably 70°C or higher, more preferably 70 to 95°C, even more preferably 70 to 90°C, still even more preferably 70 to 85°C, and further still even more preferably 70 to 80°C. The higher the temperature, the more excellent the blocking resistance.

In addition, when the aqueous dispersion composition of the present disclosure is applied to high-quality paper with a basis weight of 52 g/m² to a dry coating amount of 5.0 g/m², the prepared coated paper and the high-quality paper are laminated together and heat-bonded at a sealing pressure of 2 kg/cm², a sealing time of 3 seconds, a sealing temperature within the range of 70 to 110°C, and the resulting test piece is subjected to a T-peel test (tensile speed: 300 mm/min) in accordance with JIS Z 0238 (1998), the lowest bonding temperature at which the paper tears and the substrate is destroyed is preferably 70 to 110°C, and more preferably 80 to 100°C.

In the present specification, the term "comprise" or "contain" includes the meanings of consisting essentially of and consisting of. Further, the present disclosure includes any combination of the constituent requirements described here.

In addition, the various characteristics (properties, structures, functions, etc.) described in each embodiment of the present disclosure described above may be combined in any way in specifying the subjects encompassed by the present disclosure. In other words, the present disclosure encompasses all the subjects comprising all combinations of the combinable characteristics described in the present specification.

### Examples

The embodiments of the present disclosure are described with reference to examples in more detail below. However, the embodiments of the present disclosure are not limited to the following examples.

### Production Examples of Copolymers

### Production Example 1

A hopper was attached to the upstream end of a twin-screw extruder (model: KZW15 (produced by Technovel Corporation), shaft diameter: 15 mm, L/D: 45), and an ethylene/acrylic acid copolymer (content of structural units derived from acrylic acid: 20.0 wt%, melt index: 300 g/10 min) at 0.75 kg/hr and an ethylene/acrylic acid copolymer (content of structural units derived from acrylic acid: 15.0 wt%, melt index: 60 g/10 min) at 0.25 kg/hr were mixed and fed. After melt-kneading at a cylinder temperature of 120°C and a rotation speed of 50 rpm, the resin discharged from the twin-screw extruder was cooled in a 25°C water bath, and the resin was cut into pellets using a pelletizer to obtain an ethylene/acrylic acid copolymer with a content of structural units derived from acrylic acid of 18.75 mass%. Hereinafter, this copolymer is referred to as "the copolymer of Production Example 1."

### Production Example 2

A hopper was attached to the upstream end of a twin-screw extruder (model: KZW15 (produced by Technovel Corporation), shaft diameter: 15 mm, L/D: 45), and an ethylene/acrylic acid copolymer (content of structural units derived from acrylic acid: 20.0 wt%, melt index: 300 g/10 min) at 0.51 kg/hr and an ethylene/acrylic acid copolymer (content of structural units derived from acrylic acid: 15.0 wt%, melt index: 60 g/10 min) at 0.5 kg/hr were mixed and fed. After melt-kneading at a cylinder temperature of 120°C and a rotation speed of 50 rpm, the resin discharged from the twin-screw extruder was cooled in a 25°C water bath, and the resin was cut into pellets using a pelletizer to obtain an ethylene/acrylic acid copolymer with a content of structural units derived from acrylic acid of 17.5 mass%. Hereinafter, this copolymer is referred to as "the copolymer of Production Example 2."

### Production Example 3

A hopper was attached to the upstream end of a twin-screw extruder (model: KZW15 (produced by Technovel Corporation), shaft diameter: 15 mm, L/D: 45), and an ethylene/acrylic acid copolymer (content of structural units derived from acrylic acid: 20.0 wt%, melt index: 300 g/10 min) at 0.25 kg/hr and an ethylene/acrylic acid copolymer (content of structural units derived from acrylic acid: 15.0 wt%, melt index: 60 g/10 min) at 0.75 kg/hr were mixed and fed. After melt-kneading at a cylinder temperature of 120°C and a rotation speed of 50 rpm, the resin discharged from the twin-screw extruder was cooled in a 25°C water bath, and the resin was cut into pellets using a pelletizer to obtain an ethylene/acrylic acid copolymer with a content of structural units derived from acrylic acid of 16.25 mass%. Hereinafter, this copolymer is referred to as "the copolymer of Production Example 3."

### Preparation of Aqueous Dispersions

### Example 1

75 g of the copolymer of Production Example 1, 5.33 g of 28 mass% aqueous ammonia as a neutralizer, and 114.1 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 105.6 g of pure water was added. Subsequently, the mixture was allowed to cool at room temperature to 50°C, and the contents were filtered through a polyethylene 80-mesh sieve to obtain an aqueous dispersion.

### Example 2

75 g of the copolymer of Production Example 2, 5.33 g of 28 mass% aqueous ammonia as a neutralizer, and 118.3 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 101.1 g of pure water was added. Subsequently, the mixture was allowed to cool at room temperature to 50°C, and the contents were filtered through a polyethylene 80-mesh sieve to obtain an aqueous dispersion.

### Example 3

75 g of the copolymer of Production Example 3, 5.65 g of 28 mass% aqueous ammonia as a neutralizer, and 120.9 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 98.5 g of pure water was added. Subsequently, the mixture was allowed to cool at room temperature to 50°C, and the contents were filtered through a polyethylene 80-mesh sieve to obtain an aqueous dispersion.

### Example 4

75 g of an ethylene/acrylic acid copolymer (EAA; content of structural units derived from acrylic acid: 15 mass%, melt index: 60 g/10 min), 5.21 g of 28 mass% aqueous ammonia as a neutralizer, and 111.6 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 108.2 g of pure water was added. Subsequently, the mixture was allowed to cool at room temperature to 50°C, and the contents were filtered through a polyethylene 80-mesh sieve to obtain an aqueous dispersion.

### Comparative Example 1

75 g of an ethylene/acrylic acid copolymer (EAA; content of structural units derived from acrylic acid: 20 mass%, melt index: 300 g/10 min), 5.69 g of 28 mass% aqueous ammonia as a neutralizer, and 121.7 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 97.6 g of pure water was added. Subsequently, the mixture was allowed to cool at room temperature to 50°C, and the contents were filtered through a polyethylene 80-mesh sieve to obtain an aqueous dispersion.

### Comparative Example 2

75 g of the copolymer of Production Example 2, 9.95 g of 28 mass% aqueous ammonia as a neutralizer, and 213.0 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 2.1 g of pure water was added. Subsequently, the mixture was allowed to cool at room temperature to 50°C, and the contents were filtered through a polyethylene 80-mesh sieve to obtain an aqueous dispersion.

### Comparative Example 3

75 g of the copolymer of Production Example 3, 7.70 g of 28 mass% aqueous ammonia as a neutralizer, and 164.8 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 52.5 g of pure water was added. Subsequently, the mixture was allowed to cool at room temperature to 50°C, and the contents were filtered through a polyethylene 80-mesh sieve to obtain an aqueous dispersion.

### Comparative Example 4

75 g of the copolymer of Production Example 3, 9.76 g of 28 mass% aqueous ammonia as a neutralizer, and 208.8 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 6.5 g of pure water was added. Subsequently, the mixture was allowed to cool at room temperature to 50°C, and the contents were filtered through a polyethylene 80-mesh sieve to obtain an aqueous dispersion.

### Comparative Example 5

75 g of an ethylene/acrylic acid copolymer (EAA; content of structural units derived from acrylic acid: 15 mass%, melt index: 60 g/10 min), 8.06 g of 28 mass% aqueous ammonia as a neutralizer, and 172.4 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 44.5 g of pure water was added. Subsequently, the mixture was allowed to cool at room temperature to 50°C, and the contents were filtered through a polyethylene 80-mesh sieve to obtain an aqueous dispersion.

### Comparative Example 6

75 g of an ethylene/acrylic acid copolymer (EAA; content of structural units derived from acrylic acid: 15 mass%, melt index: 60 g/10 min), 9.48 g of 28 mass% aqueous ammonia as a neutralizer, and 202.8 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 12.7 g of pure water was added. Subsequently, the mixture was allowed to cool at room temperature to 50°C, and the contents were filtered through a polyethylene 80-mesh sieve to obtain an aqueous dispersion.

### Comparative Example 7

75 g of the copolymer of Production Example 1, 11.7 g of a 30 mass% sodium hydroxide aqueous solution as a neutralizer, and 152.2 g of water were placed in a 1000 ml pressure-resistant vessel equipped with a stirrer, and the vessel was hermetically sealed. Thereafter, the mixture was heated from 25°C to 95°C while being stirred at 500 rpm, and stirring was continued for 4 hours while the interior of the vessel was kept at 95°C. Then, the mixture was allowed to cool at room temperature to 90°C, and 61.1 g of pure water was added. Subsequently, the mixture was allowed to cool at room temperature to 50°C, and the contents were filtered through a polyethylene 80-mesh sieve to obtain an aqueous dispersion.

### Method for Producing Coated Paper

(1) The aqueous dispersions prepared in Examples 1 to 4 and Comparative Examples 1 to 7 were each applied to high-quality paper with a basis weight of 52 g/m² to a dry coating amount of 2.5 g/m² using a BEVS 1811/3 Automatic Film Applicator.
(2) The coated paper obtained in (1) above was heated and dried at 125°C for 2 minutes using a heating dryer (produced by ADVANTEC, DRE320DR).
(3) The coated surface of the coated paper obtained in (2) above was coated again with the aqueous dispersion in the same procedure as in (1).
(4) The coated paper obtained in (3) above was dried under the same drying conditions as in (2) above to finally obtain coated paper with a dry coating amount of 5.0 g/m².

### Measurement Methods

### Viscosity

The viscosity of the composition was measured with a B rotational viscometer. Specifically, the viscosity was determined by reading the viscosity value one minute after the rotor started rotating at 25°C by setting the rotation speed of the spindle rotor to 60 rpm. The rotor was appropriately set according to the viscosity. As a guide, the rotor for use was as follows: rotor No. 3 for less than 2000 mPa·s, rotor No. 4 for 2000 mPa·s or more and less than 5000 mPa·s, rotor No. 5 for 5000 mPa·s or more and less than 15000 mPa·s, rotor No. 6 for 15000 mPa·s or more and less than 40000 mPa·s, and rotor No. 7 for 40000 mPa·s or more.

### Blocking Resistance

Two sheets of the prepared coated paper were stacked so that their coated surfaces faced each other, and they were then bonded together using a heat seal tester (produced by Tester Sangyo Co., Ltd.) at a sealing pressure of 5 kg/cm², a sealing time of 2 hours, and sealing temperatures of 60, 65, 70, 75, and 80°C, thereby producing five different test pieces for each sheet of coated paper. The prepared test pieces were each subjected to a T-peel test in accordance with JIS Z 0238 (1998). Among the test pieces produced at sealing temperatures of 60, 65, 70, 75, and 80°C, the highest temperature at which interfacial peeling occurred without paper tearing was defined as the blocking resistance temperature. The higher the blocking resistance temperature, the higher the blocking resistance. The T-type peel test was performed using an Autograph (AGS-X model produced by Shimadzu Corporation) with a tensile speed set to 300 mm/min.

### Water Vapor Barrier Properties

The moisture permeability of the prepared coated paper was measured in accordance with JIS Z 0208 (1976). More specifically, a desiccant (calcium chloride) was placed in an aluminum cup, and the prepared coated paper and an O-ring to maintain a constant permeable area were stacked in this order. The cup was then sealed with molten paraffin and left to stand in a constant temperature and humidity chamber adjusted to test conditions (temperature: 40°C, device humidity: 90%), the increase in mass after 24 hours was measured, and the moisture permeability was calculated. The test jig used was produced by Yasuda Seiki Seisakusho, Ltd. The lower the moisture permeability (g/(m²·24 h)), the higher the water vapor barrier properties.

### Water Resistance

As an indicator of water resistance of the coated paper, the water absorptiveness was measured with a water absorptiveness tester (trade name: Gurley-type water absorptiveness tester, Yasuda Seiki Seisakusho, Ltd.) based on the Cobb method in accordance with JIS P 8140 (1998). The contact time of the coated paper with water was set to 5 minutes. The lower the water absorptiveness (g/m²), the higher the water resistance.

### Heat-Sealing Properties

The prepared coated paper and the high-quality paper were laminated together so that the coated surface and the high-quality paper were in contact with each other, and they were then heat-bonded using a heat gradient tester (produced by Toyo Seiki Seisakusho Co., Ltd.) at a sealing pressure of 2 kg/cm², a sealing time of 3 seconds, and a sealing temperature within the range of 70 to 110°C (specifically 70, 80, 90, 100, or 110°C). The prepared test pieces were each subjected to a T-peel test in accordance with JIS Z 0238 (1998), and the lowest bonding temperature at which the paper tore and the substrate was destroyed was defined as the heat-sealing temperature. In general, it can be said that there is practicality if this temperature is 140°C or lower. The T-type peel test was performed using an Autograph (AGS-X model produced by Shimadzu Corporation) with a tensile speed set to 300 mm/min.

The results are summarized in Table 1. "AA" in Table 1 indicates acrylic acid. For example, "AA content" indicates the content of structural units derived from acrylic acid (mass%) in the copolymer used.

The degree of neutralization of AA refers to the extent to which "structural units derived from acrylic acid" in the copolymer are neutralized, and is the molar percentage of ammonia relative to structural units derived from acrylic acid in the copolymer, which is calculated using the following formula: 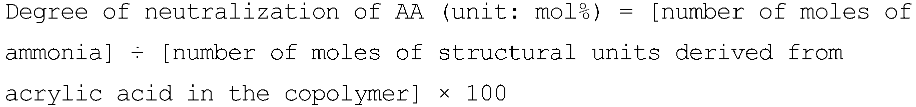 Degree of neutralization of AA (unit: mol%) = [number of moles of ammonia] ÷ [number of moles of structural units derived from acrylic acid in the copolymer] × 100

Further, the degree of resin neutralization is calculated using the following formula: 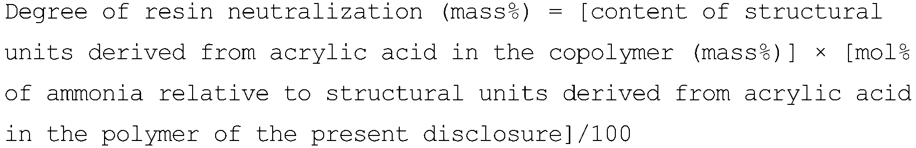 Degree of resin neutralization (mass%) = [content of structural units derived from acrylic acid in the copolymer (mass%)] × [mol% of ammonia relative to structural units derived from acrylic acid in the polymer of the present disclosure]/100

As shown in Table 1, the aqueous dispersion compositions prepared in Comparative Examples 2 to 6 could not be evaluated for their performance characteristics due to coating defects. Coating defects refer to conditions in which the coated surface is not smooth, indicating the occurrence of irregularities, such as streaks, skipping, orange peel, and pinholes. In particular, it is considered that if the viscosity of the aqueous dispersion is high, the leveling properties decrease and such coating defects occur.

**Table 1**

| | Resin type | AA content | Neutralized species | Degree of neutralization of AA | Degree of resin neutralization | Viscosity | Blocking resistance | Heat-sealing properties | Water vapor barrier properties | Water resistance |
|---|---|---|---|---|---|---|---|---|---|---|
| | | wt% | | mol% | wt% | mPa·s | °C | °C | g/(m²·24h) | g/m² |
| Ex. 1 | EAA | 18.75 | NH3 | 45 | 8.4 | 60 | 70 | 90 | 54 | 0.3 |
| Ex. 2 | EAA | 17.5 | NH3 | 50 | 8.8 | 394 | 75 | 100 | 52 | 0.6 |
| Ex. 3 | EAA | 16.25 | NH3 | 55 | 8.9 | 620 | 75 | 100 | 45 | 0.4 |
| Ex. 4 | EAA | 15 | NH3 | 55 | 8.3 | 880 | 75 | 100 | 42 | 0.6 |
| Comp. Ex. 1 | EAA | 20 | NH3 | 45 | 9.0 | 46 | <60 | 80 | 57 | 0.3 |
| Comp. Ex. 2 | EAA | 17.5 | NH3 | 90 | 15.8 | 2979 | Coating defects | | | |
| Comp. Ex. 3 | EAA | 16.25 | NH3 | 75 | 12.2 | 3899 | Coating defects | | | |
| Comp. Ex. 4 | EAA | 16.25 | NH3 | 95 | 15.4 | 7368 | Coating defects | | | |
| Comp. Ex. 5 | EAA | 15 | NH3 | 85 | 12.8 | 15800 | Coating defects | | | |
| Comp. Ex. 6 | EAA | 15 | NH3 | 100 | 15.0 | 17130 | Coating defects | | | |
| Comp. Ex. 7 | EAA | 18.75 | NaOH | 45 | 8.4 | 235 | 70 | 90 | 2582 | 38.3 |

### Industrial Applicability

The invention according to the present disclosure can provide a resin aqueous dispersion composition that has a relatively low viscosity and excellent handling properties, and that can form a film exhibiting excellent barrier properties (water resistance and water vapor barrier properties). In a preferred embodiment, the film formed from the resin aqueous dispersion composition further exhibits blocking resistance and/or heat-sealing properties that are sufficiently durable for practical use. This resin aqueous dispersion composition can be regarded as a material that responds to the recent global demand for reducing plastic consumption and is an environmentally friendly material.

## Claims

1. An aqueous dispersion composition comprising a copolymer containing structural units derived from a compound having an ethylene skeleton and structural units derived from acrylic acid, and ammonia,
wherein the content of the structural units derived from acrylic acid in the copolymer is 5 to 19 mass%, and the degree of resin neutralization calculated by the following formula is 5 to 10 mass%: Formula: 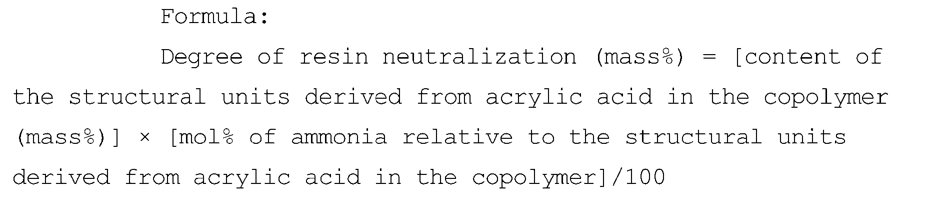 Degree of resin neutralization (mass%) = [content of the structural units derived from acrylic acid in the copolymer (mass%)] × [mol% of ammonia relative to the structural units derived from acrylic acid in the copolymer]/100

2. The aqueous dispersion composition according to claim 1, wherein the copolymer is contained in an amount of 10 to 40 mass%.

3. The aqueous dispersion composition according to claim 1 or 2, wherein the aqueous dispersion composition has a viscosity at 25°C of 1000 mPa·s or less.

4. The aqueous dispersion composition according to claim 1 or 2, wherein the compound having an ethylene skeleton is represented by formula (1):
CHR¹=CHR² (1)
wherein R¹ and R² are the same or different, and each represents a hydrogen atom, a halogen atom, a C₁₋₆ alkyl group, or a C₆₋₁₀ aryl group.

5. The aqueous dispersion composition according to claim 1 or 2, wherein the copolymer is an ethylene/acrylic acid copolymer.

6. A laminate comprising a substrate and a film on the substrate, the film being formed by applying the aqueous dispersion composition according to claim 1 or 2 to the substrate.

7. Coated paper formed by applying the aqueous dispersion composition according to claim 1 or 2 to paper.
